# EUROPÄISCHE PATENTSCHRIFT

(11) **EP 2 028 094 B1**
(45) Veröffentlichungstag und Bekanntmachung des Hinweises auf die Patenterteilung: **10.08.2011**
(21) Anmeldenummer: 08010402.9
(22) Anmeldetag: 07.06.2008
(51) Int. Cl.: B62K 23/06, B62L 3/02

(54) **Betätigungsarmatur**
Activation fitting
Armature d'actionnement

(30) Priorität: 24.08.2007 DE 102007040364
(43) Veröffentlichungstag der Anmeldung: 25.02.2009
(73) Patentinhaber: Gustav Magenwirth GmbH & Co. KG, 72574 Bad Urach (DE)
(72) Erfinder: Weiher, Franz, 72149 Neustetten (DE)
(74) Vertreter: Friese, Martin

(56) Entgegenhaltungen:
- EP-A- 1 123 861
- EP-A- 1 439 116
- WO-A-2005/049416
- DE-A1-102005 014 065
- DE-T2- 60 024 598
- DE-U1- 20 018 705
- JP-A- 2001 260 972
- JP-A- 2004 155 355
- US-A1- 2003 205 102
- US-A1- 2005 252 370
- US-A1- 2006 070 483

## Beschreibung

Die Erfindung bezieht sich auf eine Betätigungsarmatur, insbesondere Kupplungs- oder Bremsarmatur für ein Fahrzeug, mit einem Armaturgehäuse mit Mitteln zur Befestigung der Armatur an einer Lenkstange oder dergleichen Lenkelement, einem am Armaturgehäuse drehgelagerten Handhebel und einer am Armaturgehäuse angeordneten mechanischen oder hydraulischen Kraftübertragungsvorrichtung.

Betätigungsarmaturen der vorgenannten Art werden beispielsweise bei Motorrädern eingesetzt und haben sich in der Praxis im Wesentlichen bewährt.

Beispielsweise sind Betätigungsarmaturen mit einer hydraulischen Kraftübertragungsvorrichtung bekannt. Problematisch ist hierbei, dass die Druckübertragung zwischen dem Handhebel und einem Hydraulikkolben nicht gut gegen Verschmutzung und eindringendes Wasser geschützt ist.

Eine weitere Ausführung sieht eine Zwischenplatte zwischen dem Handhebel und der Druckstange vor. Für den Handhebel und die Zwischenplatte sind unterschiedliche Drehpunkte vorgesehen, so dass die Mechanik aufwändig und teuer herstellbar ist.

Aus der De 10 2005 014 065 A1, auf der die zweiteilige Form von Anspruch 1 basiert, ist eine Betätigungsarmatur mit einer Trägerplatte als Zwischenübertragungselement mit Mehrfachfunktion bekannt, die an der mit dem Handhebel gemeinsamen Drehlagerung gelagert ist, wobei diese Trägerplatte Angriffsstellen zur Druck- oder Zugbeaufschlagung des Handhebels, der Kraftübertragungsvorrichtung und eines Armaturgehäuse-Anschlags aufweist. Dadurch kann die Mechanik etwas kompakter ausgebildet sein. Durch die Trägerplatte kann die Mechanik am Hydraulikkolben leichter gegen Verschmutzung abgedichtet werden. Diese Armatur ist entgegen der Betätigungsrichtung bis zu einem Anschlag umklappbar, damit bei einem Sturz der Handhebel nicht abbricht. Der Handhebel weist jedoch keine Sicherung gegen ein unbeabsichtigtes Umklappen auf. Daher ist es möglich, dass der Handhebel während der Fahrt, beispielsweise durch einen Sprung oder Schlag, umklappt und der Fahrer in diesem Moment den Handhebel nicht mehr zum Betätigen erreichen kann. Ein solcher kritischer Fahrzustand kann zu einem Sturz oder Unfall mit möglicherweise schwerwiegenden Folgen führen.

Aufgabe der Erfindung ist es eine Betätigungsarmatur der vorgenannten Art zu schaffen, die gegen Beschädigung geschützt ist und bei der keine kritischen Fahrzustände auftreten können.

Diese Aufgabe wird durch eine Betätigungsarmatur gemäβ Anspruch 1 gelöst.

Die Trägerplatte bildet ein Zwischenübertragungselement für die Zug- oder Druckübertragung vom Handhebel auf die Kraftübertragungsvorrichtung. Durch die Anordnung auf einer gemeinsamen Drehlagerung mit dem Handhebel ist der Aufbau der Betätigungsarmatur einfach und kostengünstig realisierbar.

Der Handhebel ist entgegen der Betätigungsrichtung umklappbar und die Trägerplatte ist durch ein vorzugsweise in eine Aufnahme eingesetztes Rückstellelement beaufschlagbar. Dadurch wird verhindert, dass der Handhebel, beispielsweise bei einem Sturz, abbricht.

Bei bisherigen Betätigungsarmaturen ist nach dem Umklappen des Handhebels die Kraftübertragungsvorrichtung mit der Druckstange freigelegt. Außerdem muss dafür Sorge getragen werden, dass die Druckstange am Hydraulikkolben gegen Herausfallen gesichert ist. Diese Sicherung der Druckstange erfolgt bei der erfindungsgemäßen Betätigungsarmatur durch die auch bei umgeklapptem Handhebel anliegende Trägerplatte.

Weiterhin weist der Handhebel mindestens eine über eine Sollbruchstelle abtrennbare Anschlag-Anformung auf und es ist vorzugsweise im Bereich des Gehäuse-Anschlags für die Trägerplatte ein Gegenanschlag für die Anschlag-Anformung am Armaturgehäuse vorgesehen. Dadurch wird erreicht, dass der Handhebel nicht versehentlich oder beispielsweise durch einen Sprung oder ähnlichen Impuls, umklappen kann. Trotzdem bleibt die Sicherheit, dass bei Überlast, beispielsweise bei einem Sturz, der Hebel umklappen kann. Selbst danach bleibt der Handhebel einsatzfähig, da er durch das an ihm angreifende Rückstellelement wieder in Betriebsposition zurückgeklappt wird.

Zweckmäßigerweise ist eine Dichtung, vorzugsweise eine Balgdichtung, zur Abdichtung der Kraftübertragungsvorrichtung vorgesehen, wodurch die Kraftübertragungselemente, auch bei umgeklapptem Handhebel, vor Schmutz und eindringendem Wasser geschützt sind.

Eine zweckmäßige Weiterbildung sieht vor, dass die Trägerplatte an ihrer der Handhebel-Außenseite zugewandten Seite eine konzentrisch zur Drehachse verlaufende Rundung aufweist, so dass der Handhebel entgegen der Betätigungsrichtung und gegen die Rückstellkraft des Rückstellelements umklappbar ist.

Bevorzugt weist die Trägerplatte als Rückstellelement-Aufnahme eine Ausnehmung, insbesondere eine um den Drehpunkt konzentrische Nut, auf. Das Rückstellelement ist zweckmäßigerweise eine Feder, insbesondere eine Schenkelfeder, die in die konzentrische Nut eingesetzt ist.

In einer Ausführung der Erfindung weist der Handhebel eine gabelförmige Lager-Aufnahme auf, in der die Trägerplatte am Drehlager eingesetzt ist. Dabei weist das Armaturgehäuse beispielsweise eine U-förmige Aufnahme auf, in die die Lageraufnahme des Handhebels und die Trägerplatte eingesetzt werden können, wobei der Handhebel die Trägerplatte umgreift.

Bevorzugt weist die Betätigungsarmatur eine hydraulische Kraftübertragungsvorrichtung mit einem Hydraulikzylinder und einem Hydraulikkolben auf. Die Erfindung ist jedoch auch in Kombination mit mechanischen Betätigungsarmaturen, beispielsweise Seilzug-Betätigungsarmaturen, einsetzbar.

In einer zweckmäßigen Ausführung ist an der Trägerplatte oder dergleichen Trägerteil als Angriffsstelle für den Hydraulikkolben eine kalottenförmige Aufnahme vorgesehen, in die eine Druckstange zur Druckbeaufschlagung des Hydraulikkolbens eingreift. Durch die kalottenförmige Ausgestaltung ist eine Druckübertragung über einen weiten Winkelbereich möglich und die Montage oder die Wartung einfach, da die Verbindung selbstzentrierend ist und keinerlei Befestigung benötigt.

Eine vorteilhafte Ausgestaltung der Erfindung sieht eine Balgdichtung zur Abdichtung der Druckübertragungsteile zwischen dem Handhebel und dem Hydraulikkolben, insbesondere zwischen einer kalottenförmigen Aufnahme der Druckstange und des Hydraulikzylinders, gegen äußere Einflüsse vor, wobei an der kalottenförmigen Aufnahme und am Armaturgehäuse jeweils eine umlaufende Nut zum Einsetzen der Balgdichtung angeordnet sind. Dadurch sind die Druckübertragungsteile sehr gut schmutzgekapselt und gegen Verschmutzung und Wasser, beispielsweise auch durch Hochdruckreiniger, geschützt. Da auch beim Umklappen des Handhebels die Trägerplatte an der Druckstange anliegt und die Balgdichtung somit nicht beeinträchtigt wird, ist die Hydraulikanlage bestmöglich geschützt.

In einer weiteren vorteilhaften Ausgestaltung der Erfindung ist am Handhebel eine Griffweiteneinstelleinrichtung vorgesehen, die am Handhebel eine Gewindebohrung zur Aufnahme einer Griffweiten-Einstellschraube zur Druckbeaufschlagung der Angriffstelle an der Trägerplatte aufweist. Durch die Anordnung der Griffweiten-Einstellschraube an der Innenseite zwischen Handhebel und Trägerplatte ist ein kompakter Aufbau möglich. Außerdem ist die Gefahr einer versehentlichen Verstellung gering.

Zweckmäßigerweise weist die Griffweiten-Einstellschraube einen äußeren Betätigungskopf mit radialen Vorsprüngen zur Handbetätigung auf, so dass die Einstellschraube auch mit Handschuhen gut bedienbar ist.

In einer Ausführungsvariante der Erfindung weist der Betätigungskopf an seiner Beaufschlagungs-Stirnseite wenigstens zwei gekreuzte Profil-Einsschnitte auf und die Trägerplatte weist an der zugehörigen Angriffstelle eine an das Profil der Betätigungskopf-Einschnitte etwa angepasste Gegenanformung auf. Dadurch ist die Griffweiteneinstellung in Stufen einrastbar.

Besonders zweckmäßig ist es wenn die Griffweiten-Einstellschraube an ihrem in die Gewindebohrung eingreifenden Abschnitt eine umlaufende, in ihrer Breite dem Verstellweg entsprechende Nut aufweist und am Handhebel tangential zur Gewindebohrung ein Sicherungsstift angeordnet ist, der in die Nut eingreift. Die Breite der Nut bestimmt dabei den maximal möglichen Verstellweg und der Sicherungsstift verhindert das vollständige Herausdrehen der Einstellschraube aus der Gewindebohrung, so dass die Einstellschraube nicht verloren geht.

Ein ganz besonderer Vorteil der Erfindung ist, dass die Trägerplatte einstückig ausgebildet ist, insbesondere als Guss- oder Druckgussteil aus Leichtmetall oder Kunststoff. Dadurch ist die Trägerplatte einfach und kostengünstig herstellbar, ohne dass eine aufwändige spanende Nachbearbeitung notwendig ist.

Damit vereint die Trägerplatte alle wesentlichen Übertragungs-Funktionen in einem Bauteil, das einfach und kostengünstig herstellbar ist. Durch die gemeinsame Lagerung mit dem Handhebel ist die Trägerplatte zudem einfach austauschbar.

Ein Ausführungsbeispiel der Erfindung ist nachfolgend anhand der Zeichnungen näher erläutert.

Es zeigen:
- Fig. 1: eine Schnittansicht einer Bremsarmatur,
- Fig. 2: eine Schnittansicht der Bremsarmatur in Fig.1 mit umgeklapptem Handhebel,
- Fig. 3: eine Detailansicht der Trägerplatte mit einer Griffweiteneinstell-Schraube und einem Hydraulikkolben,
- Fig. 4: eine perspektivische Teilansicht des Handhebels im Bereich der Trägerplatte,
- Fig. 5: eine perspektivische Teilansicht des Handhebels im Bereich der Trägerplatte mit einer Sollbruchstelle am Handhebel und
- Fig. 6: den in Fig.5 gezeigten Handhebel mit Sollbruchstellen aus einer anderen Perspektive.

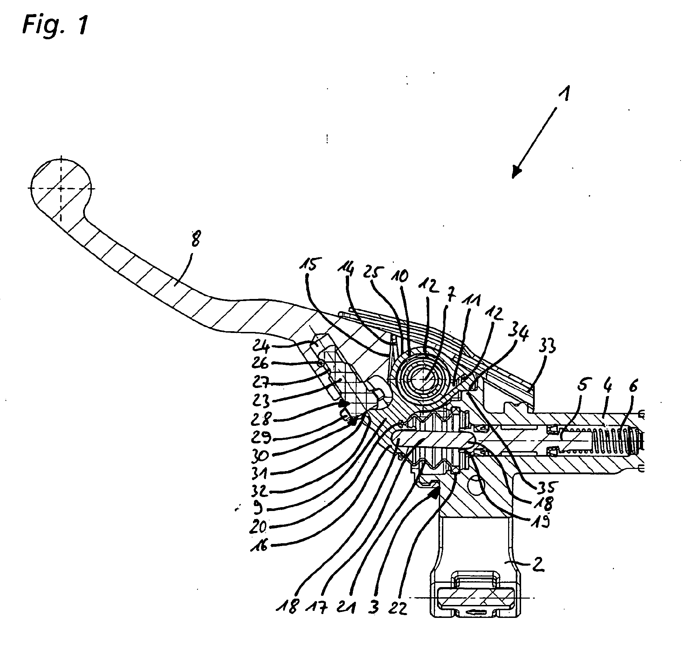

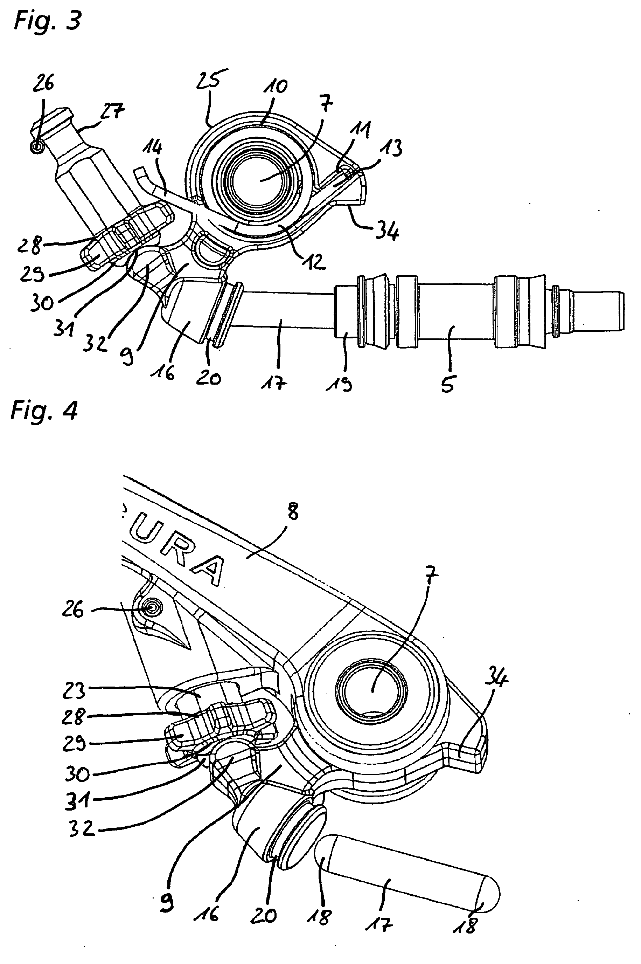

Figur 1 zeigt eine im Gesamten mit 1 bezeichnete, hydraulische Bremsarmatur für ein Motorrad, wobei die Erfindung genauso gut für eine Kupplungsarmatur einsetzbar ist. Die Bremsarmatur 1 weist eine Befestigungsschelle 2 zur Montage an einer Lenkstange (nicht gezeigt) auf. Parallel zur Lenkstange ist am Bremsarmaturen-Gehäuse 3 ein Hydraulikzylinder 4 angeordnet, in dem ein Hydraulikkolben 5 und eine Druckfeder 6 angeordnet sind. Weiterhin ist am Bremsarmaturen-Gehäuse 3 eine Drehlagerung 7 angeordnet, an der ein Handhebel 8 mit seiner gabelförmigen Lageraufnahme und eine dazwischen befindliche Trägerplatte 9 gelagert sind (Fig. 4). Der Handhebel 8 mit der Trägerplatte 9 sind dabei in einer gabel- oder U-förmigen Gehäuseanordnung gelagert.

Einzelheiten des Handhebels 8 und der Trägerplatte 9 sind gut in den Figuren 3 und 4 zu erkennen, wobei sich die folgende Beschreibung, wenn nicht explizit darauf verwiesen wird, immer auch auf diese Figuren bezieht.

Die Trägerplatte 9 weist eine zur Drehlagerung 7 konzentrische Nut 10 mit einem tangentialen Fortsatz 11 auf, in die eine Schenkelfeder 12 eingesetzt ist, so dass ein Schenkel 13 der Feder in dem tangentialen Fortsatz 11 liegt und sich an der Trägerplatte abstützt (Fig.3) während sich der andere Schenkel 14 an einer Federauflagefläche 15 am Handhebel 8 abstützt (Fig.1). Im Bereich der Federauflagefläche 15 weist die Trägerplatte eine zur Drehlagerung 7 konzentrische Rundung 25 auf, die ein Umklappen des Handhebels 8 entgegen der Brems-Betätigungsrichtung ermöglicht.

An der Trägerplatte 9 ist eine Anschlagfläche 34 vorgesehen, die in Ruhestellung des Handhebels 8 durch die Druckfeder 6 beaufschlagt, an einem Armaturgehäuse-Anschlag 35 anliegt (Fig.1).

Die Trägerplatte 9 weist weiterhin eine kalottenförmige Aufnahme 16 auf, in die eine Druckstange 17 mit abgerundeten Stirnenden 18 eingreift. Die andere Seite der Druckstange greift in das ebenfalls kalottenförmig ausgebildete Ende 19 des Hydraulikkolbens 5 ein, so dass über die Druckstange 17 die Bewegung der Trägerplatte 9 auf den Hydraulikkolben 5 übertragen wird.

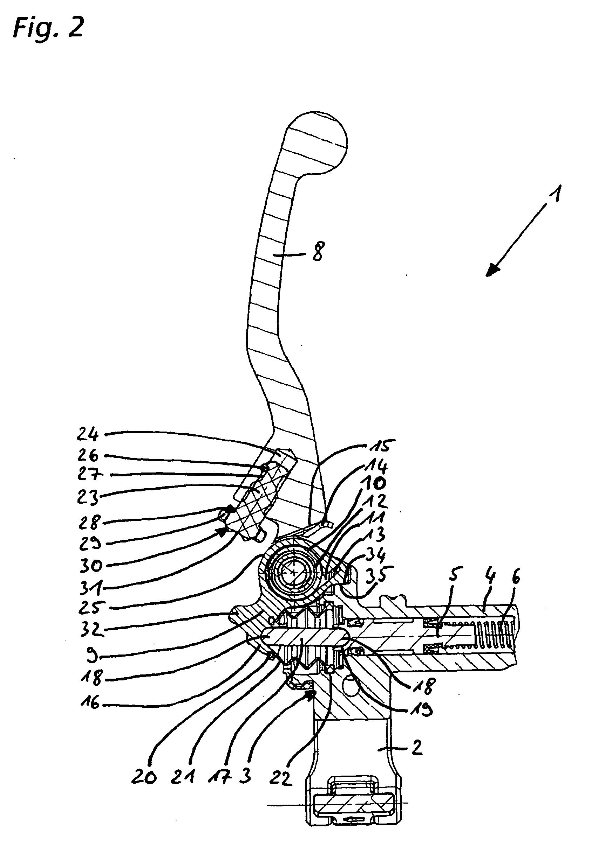

An der kalottenförmigen Aufnahme 16 an der Trägerplatte 9 ist eine umlaufende Nut 20 angeordnet, in die eine Balgdichtung 21 eingesetzt ist. Am Armaturengehäuse 3 befindet sich im Bereich des Hydraulikzylinders 4 ebenfalls eine umlaufende Nut 22, in die das andere Ende der Balgdichtung 21 eingreift und somit die Druckübertragungsteile vollständig abdichtet (Fig.1 und 2).

An der Innenseite des Handhebels 8 ist zur Aufnahme einer Griffweiten-Einstellschraube 23 eine Gewindebohrung 24 vorgesehen. In einer die Gewindebohrung 24 tangential schneidenden Gewindebohrung ist eine Sicherungsschraube 26 eingesetzt, die in eine Nut 27 in der Griffweiten-Einstellschraube 23 eingreift, um ein vollständiges Ausdrehen der Einstellschraube 23 zu verhindern. Die Breite der Nut 26 definiert dabei den Einstellbereich der Griffweiten-Einstellschraube 23.

Am Betätigungskopf 28 der Einstellschraube 23 sind radiale Vorsprünge 29 zur besseren Bedienbarkeit vorgesehen. Am Stirnende 30 des Betätigungskopfes 28 sind zwei gekreuzte Einschnitte 31 mit halbrundem Profil angeordnet, so dass eine entsprechend geformte Anformung 32 an der Trägerplatte 9 in einen der Einschnitte 31 eingreift. Durch die gekreuzte Anordnung ist die Griffweite in Viertelumdrehungen gestuft einstell- und einrastbar.

Im Bereich der Trägerplatte 9 ist eine Abdeckung 33 vorgesehen, die sich vom Handhebel 8 bis zum Armatur-Gehäuse 3 erstreckt und die Trägerplatte 9 vor Schmutz und Feuchtigkeit schützt (Fig.1).

Figur 2 zeigt die Bremsarmatur 1 mit entgegen der Betätigungsrichtung umgeklapptem Handhebel, wie dies bei einem Sturz auftreten kann. Der Einfachheit halber ist die Abdeckung 33 weggelassen. Dabei ist gut zu erkennen, dass nur der Handhebel 8 mit der Griffweiten-Einstellschraube 23 umklappt, während die am Gehäuse-Anschlag 35 anliegende Trägerplatte 9 mit der Druckstange 17 und der Balgdichtung 21 in Betriebsstellung am Hydraulikzylinder 4 verbleibt. Dadurch bleiben die Druckübertragungsteile jederzeit geschützt und die Funktion wird nicht beeinträchtigt. Durch die RückstellFeder 12 wird der Handhebel 8 wieder in die Betriebsposition zurückgestellt.

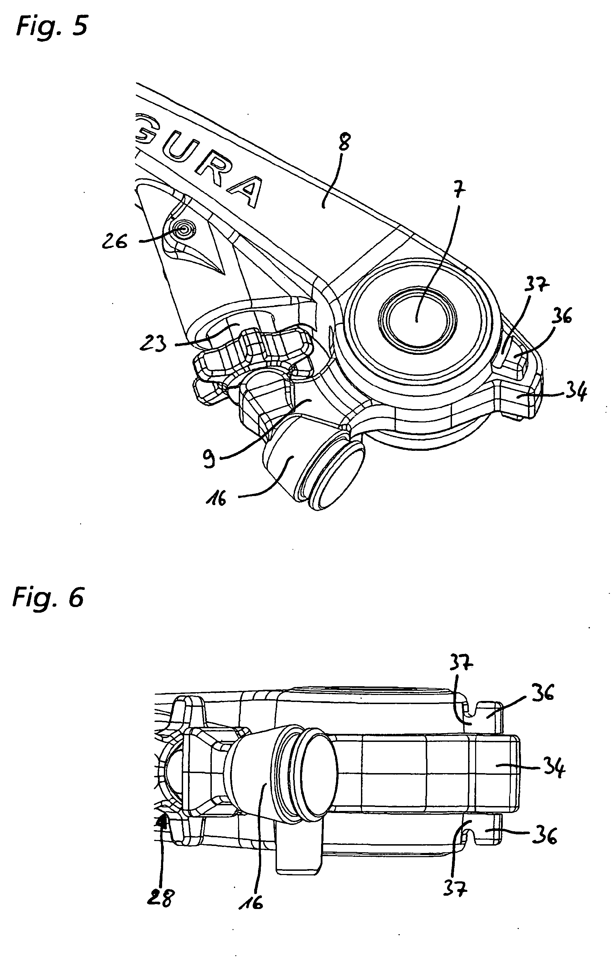

Der Handhebel 8 in Fig.5 und 6 entspricht in Ausstattung und Funktion dem Handhebel in Fig.1 bis 4, weist jedoch im Bereich des Gehäuse-Anschlags 35 (Fig.1 und 2) an seinen gabelförmigen Aufnahmen jeweils eine Anformung 36 auf, die über Sollbruchstellen 37 mit dem übrigen Handhebel verbunden sind. Der Handhebel 8 kann dadurch nicht ungewollt umklappen, was sonst unter anderem bei Schlägen oder Stößen auftreten könnte. Bei Überlast, beispielsweise bei einem Sturz, können die Anformungen 36 jedoch an den Sollbruchstellen 37 abbrechen, so dass der Handhebel 8 umklappen kann und dadurch nicht beschädigt wird und funktionstüchtig bleibt. Dadurch wird die Funktion eines nicht-klappbaren Handhebels mit der Sicherheit eines Klapphebels kombiniert.

## Patentansprüche

1. Betätigungsarmatur, insbesondere Kupplungs- oder Bremsarmatur für ein Fahrzeug, mit einem Armaturgehäuse (3) mit Mitteln (2) zur Befestigung der Armatur an einer Lenkstange oder dergleichen Lenkelement, einem am Armaturgehäuse (3) drehgelagerten Handhebel (8), mit einer am Armaturgehäuse angeordneten mechanischen oder hydraulischen Kraftübertragungsvorrichtung und mit einer Trägerplatte (9) als Zwischenübertragungselement mit Mehrfachfunktion, die an der mit dem Handhebel (8) gemeinsamen Drehlagerung (7) gelagert ist, wobei diese Trägerplatte (9) Angriffsstellen (16, 32, 34) zur Druck- oder Zugbeaufschlagung des Handhebels (8), der Kraftübertragungsvorrichtung (5) und eines Armaturgehäuse-Anschlags (35) aufweist, wobei der Handhebel (8) entgegen der Betätigungsrichtung umklappbar ist und die Trägerplatte durch ein vorzugsweise in eine Aufnahme eingesetztes Rückstellelement beaufschlagbar ist, **dadurch gekennzeichnet, dass** der Handhebel (8) mindestens eine über eine Sollbruchstelle (37) abtrennbare Anschlag-Anformung (36) aufweist und dass vorzugsweise im Bereich des Gehäuse-Anschlags (35) für die Trägerplatte (9) ein Gegenanschlag für die Anschlag-Anformung (36) am Armaturgehäuse (3) vorgesehen ist.

2. Betätigungsarmatur nach Anspruch 1, **dadurch gekennzeichnet, dass** eine Balgdichtung (21) zur Abdichtung der Kraftübertragungsvorrichtung vorgesehen ist.

3. Betätigungsarmatur nach Anspruch 1 oder 2, **dadurch gekennzeichnet, dass** die Trägerplatte (9) als Rückstellelement-Aufnahme eine Ausnehmung, insbesondere eine um den Drehpunkt konzentrische Nut (10), aufweist.

4. Betätigungsarmatur nach einem der Ansprüche 1 oder 3, **dadurch gekennzeichnet, dass** das Rückstellelement eine Feder, insbesondere eine Schenkelfeder (12), ist.

5. Betätigungsarmatur nach einem der Ansprüche 1 bis 4, **dadurch gekennzeichnet, dass** die Trägerplatte (9) an ihrer der Handhebel-Außenseite zugewandten Seite eine konzentrisch zur Drehachse verlaufende Rundung (25) aufweist und der Handhebel (8) entgegen der Betätigungsrichtung und gegen die Rückstellkraft des Rückstellelements (12) umklappbar ist.

6. Betätigungsarmatur nach einem der Ansprüche 1 bis 5, **dadurch gekennzeichnet, dass** der Handhebel (8) eine gabelförmige Lager-Aufnahme aufweist, in der die Trägerplatte (9) am Drehlager (7) eingesetzt ist.

7. Betätigungsarmatur nach einem der Ansprüche 1 bis 6, **dadurch gekennzeichnet, dass** die Betätigungsarmatur eine mechanische Kraftübertragungsvorrichtung, vorzugsweise mit einem von der Trägerplatte (9) zugbeaufschlagten Seilzug aufweist.

8. Betätigungsarmatur nach einem der Ansprüche 1 bis 7, **dadurch gekennzeichnet, dass** die Betätigungsarmatur eine hydraulische Kraftübertragungsvorrichtung mit einem Hydraulikzylinder und einem Hydraulikkolben aufweist.

9. Betätigungsarmatur nach Anspruch 8, **dadurch gekennzeichnet, dass** an der Trägerplatte (9) als Angriffsstelle für den Hydraulikkolben (5) eine kalottenförmige Aufnahme (16) vorgesehen ist, in die eine Druckstange (17) zur Druckbeaufschlagung des Hydraulikkolbens (5) eingreift.

10. Betätigungsarmatur nach Anspruch 9, **dadurch gekennzeichnet, dass** die Balgdichtung (21) zur Abdichtung der Druckübertragungsteile zwischen dem Handhebel (8) und dem Hydraulikkolben (5), insbesondere der kalottenförmigen Aufnahme (16), der Druckstange (17) und des Hydraulikzylinders (4), gegen äußere Einflüsse vorgesehen ist und dass an der kalottenförmigen Aufnahme (16) und am Armaturgehäuse (3) jeweils eine umlaufende Nut (20,22) zum Einsetzen der Balgdichtung (21) angeordnet sind.

11. Betätigungsarmatur nach einem der Ansprüche 1 bis 10, **dadurch gekennzeichnet, dass** am Handhebel (8) eine Griffweiteneinstelleinrichtung vorgesehen ist, die am Handhebel (8) eine Gewindebohrung (24) zur Aufnahme einer Griffweiten-Einstellschraube (23) zur Druckbeaufschlagung der Angriffstelle (32) an der Trägerplatte (9) aufweist.

12. Betätigungsarmatur nach Anspruch 11, **dadurch gekennzeichnet, dass** die Griffweiten-Einstellschraube (23) einen äußeren Betätigungskopf (28) mit radialen Vorsprüngen (29) zur Handbetätigung aufweist.

13. Betätigungsarmatur nach Anspruch 11, **dadurch gekennzeichnet, dass** der Betätigungskopf (28) an seiner Beaufschlagungs-Stirnseite (30) wenigstens zwei gekreuzte Profil-Einsschnitte (31) aufweist und dass die Trägerplatte (9) an der zugehörigen Angriffstelle eine an das Profil der Betätigungskopf-Einschnitte (31) etwa angepasste Gegenanformung (32) aufweist.

14. Betätigungsarmatur nach einem der Ansprüche 11 bis 13, **dadurch gekennzeichnet, dass** die Griffweiten-Einstellschraube (23) an ihrem in die Gewindebohrung eingreifenden Abschnitt eine umlaufende, in ihrer Breite dem Verstellweg entsprechende Nut (27) aufweist und am Handhebel (8) tangential zur Gewindebohrung (24) ein Sicherungsstift (26) angeordnet ist, der in die Nut (27) eingreift.

15. Betätigungsarmatur nach einem der Ansprüche 1 bis 14, **dadurch gekennzeichnet, dass** die Trägerplatte (9) einstückig ausgebildet ist, insbesondere als Gussteil aus Leichtmetall oder Kunststoff.

## Claims

1. Actuation fitting, in particular a clutch or brake fitting for a vehicle, comprising a fitting housing (3) having means (2) for mounting the fitting on a handlebar or similar steering member, a hand lever (8) rotatably supported on the fitting housing (3), comprising a mechanical or hydraulic power transmission apparatus fixed to the fitting housing and comprising a support plate (9) as an intermediate transmission member having multiple functions, said plate being supported on the rotary bearing (7) together with the hand lever (8), wherein this support plate (9) has points of attack (16, 32, 34) for applying a pressure or tension to the hand lever (8), the power transmission apparatus (5) and a fitting housing stop (35), wherein the hand lever (8) can be turned opposed to the actuation direction and the support plate can be loaded by a reset element preferably inserted in a support, **characterized in that** the hand lever (8) has at least one stop projection (36) adapted to be separated via a predetermined breaking point (37) and that a counter-stop for the stop projection (36) is provided at the fitting housing (3), preferably in the area of the housing stop (35) for the support plate (9).

2. Actuation fitting according to claim 1, **characterized in that** a bellow seal (21) is provided for sealing the power transmission apparatus.

3. Actuation fitting according to claim 1 or 2, **characterized in that** as a reset element support the support plate (9) has a recess, in particular a groove (10) concentric about the center of rotation.

4. Actuation fitting according to claim 1 or 3, **characterized in that** the reset element is a spring, in particular a leg spring (12).

5. Actuation fitting according to any of claims 1 to 4, **characterized in that** the support plate (9) has a rounding (25) extending concentrically relative to the axis of rotation on its side facing the hand lever exterior and the hand lever (8) can be turned opposed to the actuation direction and against the reset force of the reset element (12).

6. Actuation fitting according to any of claims 1 to 5, **characterized in that** the hand lever (8) has a fork-like bearing support serving for accommodating the support plate (9) at the rotary bearing (7).

7. Actuation fitting according to any of claims 1 to 6, **characterized in that** the actuation fitting has a mechanical power transmission apparatus, preferably with a control cable tensioned by the support plate (9).

8. Actuation fitting according to any of claims 1 to 7, **characterized in that** the actuation fitting has a hydraulic power transmission apparatus having a hydraulic cylinder and a hydraulic piston.

9. Actuation fitting according to claim 8, **characterized in that** a dome-shaped support (16) is provided on the support plate (9) as a point of attack for the hydraulic piston (5), with which a push rod (17) meshes for pressure-loading the hydraulic piston (5).

10. Actuation fitting according to claim 9, **characterized in that** the bellow seal (21) is provided for sealing the pressure transmission parts between the hand lever (8) and the hydraulic piston (5), in particular the dome-shaped support (16), the push rod (17) and the hydraulic cylinder (4), against external influences and that a circumferential groove (20, 22) for inserting the bellow seal (21) is respectively arranged at the dome-shaped support (16) and the fitting housing (3).

11. Actuation fitting according to any of claims 1 to 10, **characterized in that** the hand lever (8) is provided with a handle width adjustment means which has a threaded hole (24) on the hand lever (8) for receiving a handle width adjustment screw (23) to apply a pressure to the point of attack (32) on the support plate (9).

12. Actuation fitting according to claim 11, **characterized in that** the handle width adjustment screw (23) has an outer actuation head (28) having radial protrusions (29) for manual actuation.

13. Actuation fitting according to claim 11, **characterized in that** the actuation head (28) has at least two crossed profile recesses (31) on its force-transmitting front end (30) and that the support plate (9) has a counter-projection (32) roughly adapted to the profile of the actuation head notches (31) on the associated point of attack.

14. Actuation fitting according to any of claims 11 to 13, **characterized in that** the handle width adjustment screw (23) has a circumferential groove (27) whose width corresponds to the adjustment path on its section meshing with the threaded hole and a locking pin (26) which meshes with the groove (27) is arranged tangentially to the threaded hole (24) at the hand lever (8).

15. Actuation fitting according to any of claims 1 to 14, **characterized in that** the support plate (9) is formed as one piece, in particular as a cast part made of light metal or plastics.

## Revendications

1. Armature d'actionnement, en particulier armature d'embrayage ou armature de freinage pour un véhicule automobile, comprenant un boîtier d'armature (3) avec des moyens (2) pour la fixation de l'armature sur une barre directrice ou un élément directeur similaire, un levier manuel (8) monté en rotation sur le boîtier d'armature (3), comprenant un dispositif de transmission de force mécanique ou hydraulique agencé sur le boîtier d'armature et comprenant une plaque porteuse (9) à titre d'élément de transmission intermédiaire avec fonction multiple, qui est monté sur le palier rotatif (7) commun avec le levier manuel (8), dans laquelle ladite plaque porteuse (9) comporte des emplacements d'attaque (16, 32, 34) pour la sollicitation en pression ou en traction du levier manuel (8), du dispositif de transmission de force (5) et d'une butée de boîtier (35), dans laquelle le levier manuel (8) est susceptible d'être rabattu à l'encontre de la direction d'actionnement, et la plaque porteuse est susceptible d'être sollicitée par un élément de rappel, de préférence mise en place dans un logement,
**caractérisée en ce que** le levier manuel (8) comprend au moins une conformation de butée (36) capable d'être séparée via un emplacement de rupture de consigne (37), et **en ce qu'**il est prévu, de préférence dans la région de la butée de boîtier (35) pour la plaque porteuse (9), une butée antagoniste pour la conformation de butée (36) sur le boîtier d'armature (3).

2. Armature d'actionnement selon la revendication 1, **caractérisée en ce qu'**il est prévu une étanchéité à soufflet (21) pour étancher le dispositif de transmission de force.

3. Armature d'actionnement selon la revendication 1 ou 2, **caractérisée en ce que** la plaque porteuse (9) comporte, à titre de logement pour l'élément de rappel, un évidement, en particulier une gorge (10) concentrique autour du centre de rotation.

4. Armature d'actionnement selon l'une des revendications 1 ou 3, **caractérisée en ce que** l'élément de rappel est un ressort, en particulier un ressort à bras (12).

5. Armature d'actionnement selon l'une des revendications 1 à 4, **caractérisée en ce que** la plaque porteuse (9) comprend, sur son côté tourné vers la face extérieure du levier manuel, un arrondi (25) qui s'étend concentriquement à l'axe de rotation, et le levier manuel (8) est susceptible d'être rabattu en sens contraire à la direction d'actionnement et à l'encontre de la force de rappel de l'élément de rappel (12).

6. Armature d'actionnement selon l'une des revendications 1 à 5, **caractérisée en ce que** le levier manuel (8) comprend un logement-palier en forme de fourche, dans lequel la plaque porteuse (9) est mise en place au niveau du palier de rotation (7).

7. Armature d'actionnement selon l'une des revendications 1 à 6, **caractérisée en ce que** l'armature d'actionnement comprend un dispositif de transmission de force mécanique, de préférence un système à câble sollicité en traction par la plaque porteuse (9).

8. Armature d'actionnement selon l'une des revendications 1 à 7, **caractérisée en ce que** l'armature d'actionnement comprend un dispositif de transmission de force hydraulique avec un cylindre hydraulique et un piston hydraulique.

9. Armature d'actionnement selon la revendication 8, **caractérisée en ce qu'**il est prévu, sur la plaque porteuse (9) et à titre d'emplacement d'attaque pour le piston hydraulique (5), un logement (16) en forme de calotte dans lequel s'engage une barre de pression (17) pour la sollicitation en pression du piston hydraulique (5).

10. Armature d'actionnement selon la revendication 9, **caractérisée en ce que** l'étanchéité à soufflet (21) est prévue pour étancher les pièces de transmission de pression entre le levier manuel (8) et le piston hydraulique (5), en particulier le logement en forme de calotte (16), la barre de pression (17), et le cylindre hydraulique (4), à l'encontre des influences extérieures, et **en ce qu'**une gorge périphérique respective (20, 21) est agencée sur le logement forme de calotte (16) et sur le boîtier d'armature (3) pour la mise en place de l'étanchéité à soufflet (21).

11. Armature d'actionnement selon l'une des revendications 1 à 10, **caractérisée en ce qu'**un moyen de réglage de portée de préhension est prévu sur le levier manuel (8), ce moyen comprenant sur le levier manuel (8) un perçage taraudé (24) pour la réception d'une vis de réglage de portée de préhension (23) pour la sollicitation en pression de l'emplacement d'attaque (32) sur la plaque porteuse (9).

12. Armature d'actionnement selon la revendication 11, **caractérisée en ce que** la vis de réglage de portée de préhension (23) comprend une tête d'actionnement extérieure (28) avec des saillies radiales (29) pour l'actionnement à la main.

13. Armature d'actionnement selon la revendication 11, **caractérisée en ce que** la tête d'actionnement (28) présente, sur sa face frontale de sollicitation (30), au moins deux entailles profilées en croix (31), et **en ce que** la plaque porteuse (9) présente, à l'emplacement d'attaque associé, une conformation antagoniste (32) adaptée approximativement au profil des entailles (31) de la tête d'actionnement.

14. Armature d'actionnement selon l'une des revendications 11 à 13, **caractérisée en ce que** la vis de réglage de portée de préhension (23) comporte, au niveau de son tronçon qui s'engage dans le perçage taraudé, une gorge périphérique (27) d'une largeur correspondant au trajet de déplacement, et une tige de blocage (26) est agencée sur le levier manuel (8) tangentiellement au perçage taraudé (24), tige qui s'engage dans la gorge (27).

15. Armature d'actionnement selon l'une des revendications 1 à 14, **caractérisée en ce que** la plaque porteuse (9) est réalisée d'une seule pièce, en particulier comme une pièce de fonderie et en métal léger ou en matière plastique.
